# EUROPÄISCHE PATENTSCHRIFT

(11) **EP 2 532 219 B1**
(45) Veröffentlichungstag und Bekanntmachung des Hinweises auf die Patenterteilung: **18.07.2018**
(21) Anmeldenummer: 12401110.7
(22) Anmeldetag: 01.06.2012
(51) Int. Cl.: A01B 73/00, A01C 15/00

(54) **Abstellvorrichtung für eine Dreipunktanbaumaschine**
Placement device for a three-point attachable machine
Dispositif de stationnement pour une machine de montage à trois points

(30) Priorität: 07.06.2011 DE 102011050889
(43) Veröffentlichungstag der Anmeldung: 12.12.2012
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A2- 0 250 817
- EP-A2- 2 191 707
- DE-A1- 19 738 264
- JP-A- 2008 212 073

## Beschreibung

Die Erfindung betrifft eine Abstellvorrichtung für eine Dreipunktanbaumaschine gemäß des Oberbegriffes des Patentanspruches 1.

Eine derartige Abstellvorrichtung für eine Dreipunktanbaumaschine ist durch die EP 2 191 707 A2 bekannt. Die Umstellung der Abstellvorrichtung von der Abstellposition in die Nichtabstellposition und umgekehrt ist relativ umständlich.

Der Erfindung liegt die Aufgabe zugrunde, eine alternative und einfachere Verriegelung der Abstellvorrichtung in beiden Positionen zu ermöglichen.

Diese Aufgabe wird erfindungsgemäß durch die kennzeichnenden Merkmale des Anspruches 1 gelöst.

Infolge dieser Maßnahmen können durch einfaches verschwenken der Abstellstützen mit Unterstützung der federnden Elemente die Abstellstütze in die jeweilige Position gebracht werden. Die federnden Elemente sichern die Abstellstützen in der jeweiligen Position. Weiterhin ergibt sich eine einfache Anordnung der Abstellstützen an dem Rahmen
Um in einfacher Weise die Abstellstützen durch die federnden Elemente verschwenken zu können, ist vorgesehen, dass zwischen den Abstellstützen und den federnden Elementen zumindest ein Zugelement angeordnet ist, dass das Zugelement mittels eines wirksamen Hebelarmes zur Erzeugung eines Drehmomentes und einer Drehung der jeweiligen Abstellstütze an der jeweiligen Abstellstütze befestigt ist.

Eine einfache Anbindung der federnden Elemente an den Abstellstützen wird dadurch erreicht, dass das Zugelement gurtartig und die federnden Elemente jeweils als Zugfeder ausgebildet sind.

Zur Erzeugung einer Drehung der Abstellstützen und des Aufbringens eines Drehmomentes auf die jeweilige Abstellstütze wird dadurch erreicht, dass das jeweilige Zugelement beabstandet zu dem jeweiligen Verriegelungselement angeordnet ist.

Um in einfacher Weise eine Arretierung der Abstellstützen in der Abstellposition zu erreichen, ist vorgesehen, dass die Arretierungselemente vorzugsweise im oberen Bereich der Gelenke zwischen den Abstellstützen und dem Rahmen angeordnet sind.

Ein einfaches und sicheres verstellen der Abstellstützen durch eine Fußbetätigung lässt sich dadurch erreichen, dass an der jeweiligen Abstellstütze eine Fußbetätigungselement zur Umstellung der Abstellstütze in die jeweilige Abstell- und Nichtabstellposition angeordnet ist.

Weitere Einzelheiten der Erfindung sind der Beispielsbeschreibung und den Zeichnungen zu entnehmen. Hierbei zeigen
- Fig. 1: der untere Teil des Rahmens einer Verteilmaschine in der Seitenansicht mit Abstellstützen in der Abstellposition,
- Fig. 2: der untere Teil des Rahmens einer Verteilmaschine in der Seitenansicht mit Abstellstützen in der Ansicht von hinten,
- Fig. 3: die in Fahrtrichtung linke Seite der Verteilmaschine in der Ansicht gemäß Fig. 2, jedoch unter Weglassung einer Abdeckschiene,
- Fig. 4: die Abstellstütze der in Fahrtrichtung gesehen linken Seite in Abstellposition in vergrößerter Darstellung und vergrößertem Maßstab in der Ansicht gemäß Fig. 3,
- Fig. 5: die hintere Lagerung der Abstellstütze der in Fahrtrichtung gesehen linken Seite in Abstellposition gemäß Fig. 3 in verkleinerter Darstellung in der Ansicht V - V,
- Fig. 6: die Abstellstütze der in Fahrtrichtung gesehen linken Seite in der Darstellungsweise gemäß Fig. 4, wobei die Abstellstütze aus der Verriegelungsstellung für die Abstellposition entriegelt und in der ersten Verschwenkphase und
- Fig. 7: die Abstellstütze der in Fahrtrichtung gesehen linken Seite in der Darstellungsweise gemäß Fig. 4, wobei die Abstellstütze sich in der Nichtabstellposition befindet.

Die Verteilmaschine ist als Zentrifugaldüngerstreuer ausgebildet. Der Zentrifugaldüngerstreuer weist den nicht dargestellten Vorratsbehälter, den Rahmen 1 sowie die nicht dargestellte als Scheibenstreuwerk ausgebildete Verteileinrichtung auf. Im unteren Bereich des Vorratsbehälters ist in nicht dargestellter und bekannter Weise eine einstellbare Dosiereinrichtung, die als mit einem Schieber in ihrer Öffnungsweite einstellbare Auslauföffnung aufgebildet ist, angeordnet. Über die Dosiereinrichtung wird das sich im Vorratsbehälter befindliche Material, beispielsweise Dünger, dem Zentrifugalstreuwerk in einstellbaren Mengen zugeführt.

An dem Rahmen 1 sind auf der Vorderseite die Dreipunktkupplungselemente 2 angeordnet, über welche die Verteilmaschine an den Dreipunktkraftheber eines Schleppers in bekannter Weise anzukuppeln ist.

Beidseitig des Rahmens 1 sind Abstellstützen 3 angeordnet.

Die Abstellstützen 3 weisen jeweils einen in Fahrtrichtung 4 verlaufenden Rohrträger 5 auf, an dessen vorderen Ende die um eine aufrechte Achse verschwenkbaren Lenkrolle 6 und auf der Rückseite über einen Tragarm 7 die Laufrolle 8 angeordnet ist.

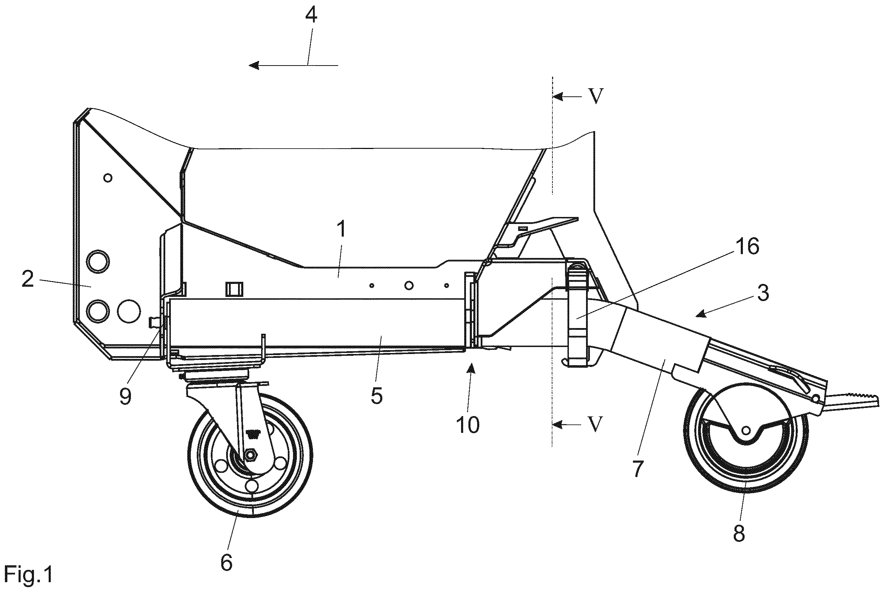

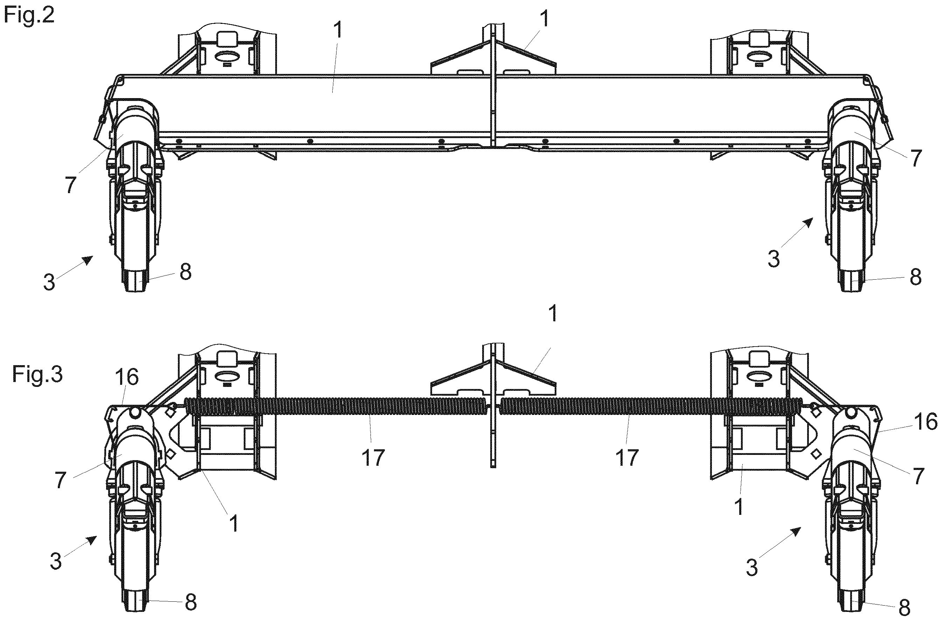

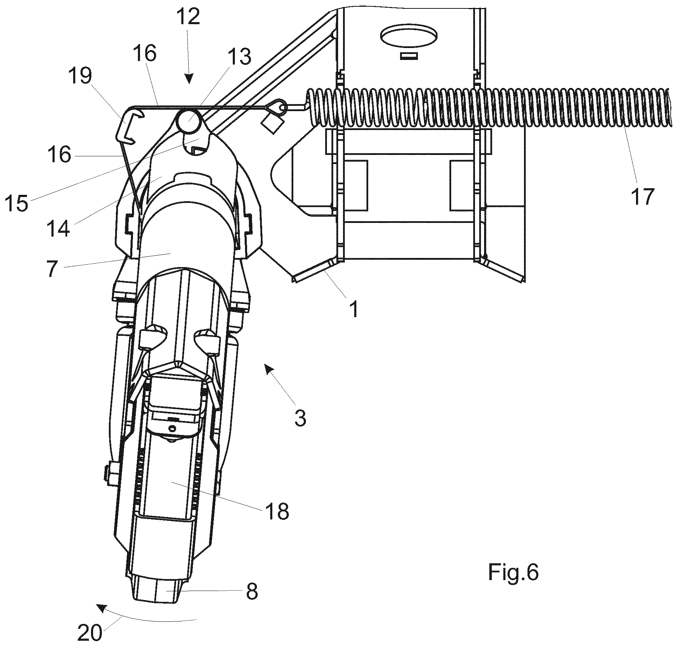

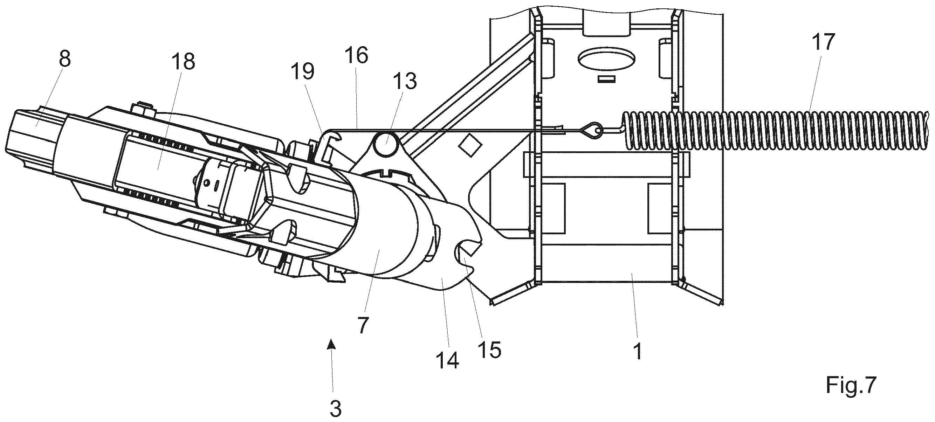

Der rohrförmige Träger 5 der Abstellstütze 3 ist mittels der vorderen und der hinteren Gelenkhalterungen 9 und 10 am Rahmen 1 der Verteilmaschine angeordnet. Zur sicheren Befestigung und Anordnung der Abstellstützen 3 sind die beiden Gelenkhalterungen 9 und 10 beabstandet zueinander angeordnet. Die Abstellstützen 3 sind über das rohrförmige Tragrohr und die Gelenke der Gelenkhalterungen 9 und 10, um eine in Fahrtrichtung 4 verlaufende Gelenkachse zwischen der in den Fig. 1 bis 5 dargestellten Abstellposition über die Entriegelungsposition gemäß Fig. 6 in die in den Fig. 7 dargestellte nach oben geklappte Nichtabstellposition bringbar.

Die hinteren Gelenkhalterungen 10, die an dem Rahmen 1 angeordnet sind, weisen ein sich in aufrechter Richtung erstreckende Aussparung 11 auf, in welchem der rohrförmige Längsträger 5 der Abstellstützen 3 in seinem hinteren Bereich verschwenkbar angeordnet ist.

Zwischen dem Längsträger 5 der Abstellstützen 3 und dem Rahmen 1 im Bereich der hinteren Gelenkhalterungen 10, die an dem Rahmen 2 angeordnet sind, sind die Abstellstützen 3 in ihrer Abstellposition arretierende Arretierungselemente 12 angeordnet.

Damit die Abstellstützen 3 gemäß der hinteren Gelenkanordnung 10 um die in Fahrtrichtung 4 verlaufende Achse in den Aussparungen 11 der hinteren Gelenkhalterungen 10 verschwenkt werden können, weisen die Abstellstützen 3 zumindest in diesem Bereich, d.h. im Bereich der Gelenke der Gelenkanordnungen einen runden Querschnitt aufweisenden Abschnitt auf. Im Ausführungsbeispiel ist der Längsträger 5 durchgehend von einem einen runden Querschnitt aufweisenden Rohr ausgebildet.

Die Arretierungselemente 12 sind um Ausführungsbeispiel im oberen Bereich der Gelenke der hinteren Gelenkhalterung 10 angeordnet.

Die Arretierungselemente 12 bestehen aus zwei zueinander verriegelbaren Teilelementen 13 und 14, wobei das Teilelement 14 die Aussparung 15 aufweist. Die Kontur der Aussparung 15 entspricht zumindest annähernd dem als Erhebung ausgebildeten Teilelement 13. Das Teilelement 13 fasst in der Abstellposition in die Aussparung 15 und verriegelt die Abstellstütze 4 dann in der Abstellposition, welches nachfolgend noch näher beschrieben wird. Das Teilelement 14 mit der Aussparung 15 ist im Ausführungsbeispiel am Rohrträger 5 angeordnet, während die Erhebung 13 sich am Rahmen 1 befindet.

Beabstandet zu dem Verriegelungselement 12 ist an dem Rohrträger 5 der jeweiligen Abstellstütze 3 ein gurtartiges Zugelement 16 mittels geeigneter Befestigungsmittel angeordnet. An dem anderen Ende des Gurtes 16 ist ein am Rahmen 1 befestigtes und als Zugfeder 17 ausgebildetes federndes Element angeordnet.

Dieses jeweils zwischen der Abstellstütze 3 und dem Rahmen 1 angeordnete federnde Element 17 ist somit mittels eines wirksamen Hebelarmes zur Erzeugung eines Drehmomentes und einer Drehung der jeweiligen Abstellstütze 3 an der jeweiligen Abstellstütze 3 befestigt. Aufgrund dieser Anordnung des Zugelementes 16 und der Zugfeder 17 werden die Abstellstützen 3 in der jeweiligen Abstell- und Nichtabstellposition gehalten, festgehalten bzw. arretiert.

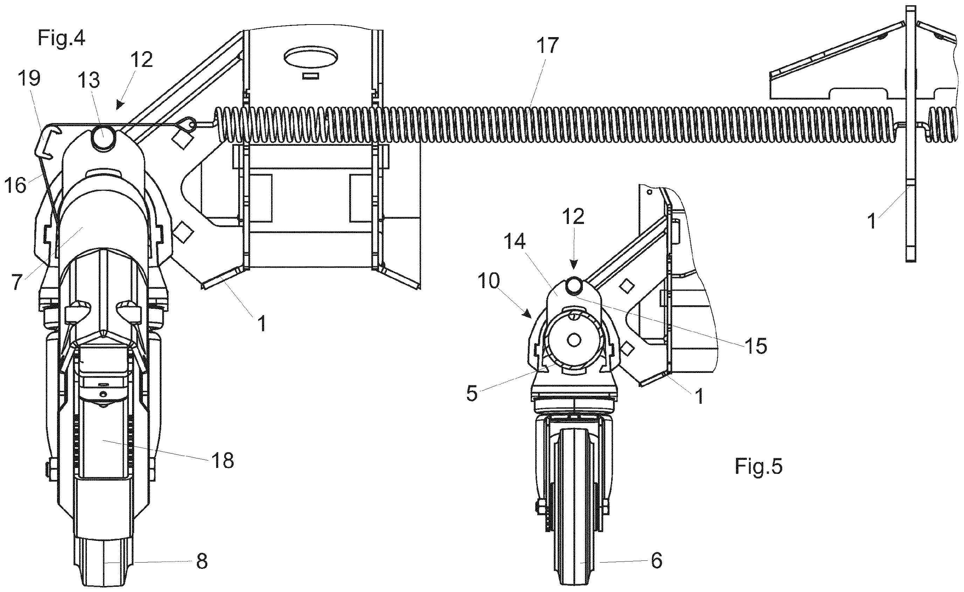

Wenn die Verteilmaschine über den Dreipunkkraftheber angehoben ist, lassen sich die Abstellstützen 3 entriegeln, in dem die jeweilige Abstellstütze 3 in ihrem hinteren Bereich nach unten gedrückt werden kann, wie dies die Fig. 1 und 5 zeigen. Dies geschieht dadurch, dass eine Bedienungsperson mit ihrem Fuß auf den hinteren Bereich der Abstellstütze 3 auf die Abstellstütze 3 tritt. Hierzu ist an der jeweiligen Abstellstütze 3 ein Fußbetätigungselement 18 zur Umstellung der Abstellstütze 3 in die jeweilige Abstell- bzw. Nichtabstellposition angeordnet. Hierdurch wird die Abstellstütze 3 nach unten gedrückt, so dass die Aussparung 15 des Teilelementes 14 von der Erhebung 15 weggedrückt wird, so dass das Verriegelungselement 12 zum Verriegeln der jeweiligen Abstellstütze 3 in der Abstellposition gemäß Fig. 1 - 5 entriegelt wird. Von dem über das am Rahmen 1 befestigte Umlenkelement 19 geführten federbelasteten Gurt wird die Abstellstütze 3 in Pfeilrichtung 20 über die in Fig. 6 dargestellte Zwischenposition in die in Fig. 7 dargestellte nicht Abstellposition verschwenkt. In dieser Nichtabstellposition wird der die Abstellstütze 3 von dem federbelasteten Gurt 16 gehalten. Die Maschine ist dann für den Einsatzfall vorbereitet.

Wenn die Maschine abgestellt werden soll, wird die jeweilige Abstellstütze 3 aus der Fig. 7 dargestellten Nichtabstellposition durch Fußbetätigung in die in den Fig. 1 - 5 dargestellte Abstellposition verschwenkt, wobei die Erhebung 13 wieder in die Aussparung 15 des Teilelementes 14 einrastet. Die jeweilige Abstellstütze 3 ist dann in der Abstellposition verriegelt. Wenn beide Abstellstützen 3 der Verteilmaschine in dieser Abstellposition gebracht sind, kann in die Maschine sicher auf dem Boden abgestellt werden.

## Patentansprüche

1. Abstellvorrichtung für eine Dreipunktanbaumaschine, insbesondere Verteilmaschine, wobei die Abstellvorrichtung jeweils im seitlichen Bereich der Maschine an deren Rahmen mittels einer Gelenkanordnung angeordnete und um eine in Fahrtrichtung verlaufende Gelenkachse zwischen einer Abstellposition und zumindest einer Nichtabstellposition verschwenkbare Abstellstützen aufweist, wobei die Abstellstützen zumindest in der Abstellposition mittels Arretierungselementen arretierbar sind, **dadurch gekennzeichnet, dass** den Abstellstützen (3) zum Festhalten und/oder Arretieren der Abstellstützen (3) in der jeweiligen Abstell- und Nichtabstellposition federnde Elemente (17), die die Abstellstützen (3) in der jeweiligen Position halten, zugeordnet sind, dass die Abstellstützen (3) zumindest in Bereich der Gelenke der Gelenkanordnung einen runden Querschnitt aufweisenden Abschnitt aufweisen, dass die am Rahmen (3) befestigten Gelenkhülsen der Gelenke der Gelenkanordnung im Bereich der Arretierungselemente (12) als sich in aufrechter Richtung erstreckende Aussparungen (15) ausgebildet sind, und dass die Festhalte- und/oder Arretierungselemente (12) zwischen den Abstellstützen (3) und dem Rahmen (1) angeordnet sind.

2. Abstellvorrichtung nach Anspruch 1, **dadurch gekennzeichnet, dass** zwischen den Abstellstützen (3) und den federnden Elementen (17) zumindest ein Zugelement (16) angeordnet ist, dass das Zugelement (16) mittels eines wirksamen Hebelarmes zur Erzeugung eines Drehmomentes und einer Drehung der jeweiligen Abstellstütze (3) an der jeweiligen Abstellstütze (3) befestigt ist.

3. Abstellvorrichtung nach zumindest einem der vorstehenden Ansprüche, **dadurch gekennzeichnet, dass** das Zugelement (16) gurtartig und die federnden Elemente jeweils als Zugfeder (17) ausgebildet sind.

4. Abstellvorrichtung nach Anspruch 2, **dadurch gekennzeichnet, dass** das jeweilige Zugelement (16) beabstandet zu dem jeweiligen Arretierungselement (12) angeordnet ist.

5. Abstellvorrichtung nach zumindest einem der vorstehenden Ansprüche, **dadurch gekennzeichnet, dass** die Arretierungselemente (12) vorzugsweise im oberen Bereich der Gelenke zwischen den Abstellstützen (3) und dem Rahmen (1) angeordnet sind.

6. Abstellvorrichtung nach zumindest einem der vorstehenden Ansprüche, **dadurch gekennzeichnet, dass** an der jeweiligen Abstellstütze (3) ein Fußbetätigungselement (18) zur Umstellung der Abstellstütze (3) in die jeweilige Abstell- und Nichtabstellposition angeordnet ist.

## Claims

1. Parking device for a three-point attachment machine, in particular distributor machine, wherein the parking device has parking supports which are each arranged in the lateral region of the machine, on its frame by means of a joint arrangement, and can be pivoted about an articulation axis, running in the direction of travel, between a parked position and at least one non-parked position, wherein the parking supports can be locked at least in the parked position by means of locking elements, **characterized in that** in order to secure and/or lock the supporting supports (3) in the respective parked position and non-parked position, the parking supports (3) are assigned sprung elements (17) which keep the parking supports (3) in the respective position, **in that** the parking supports (3) have, at least in the region of the joints of the joint assembly, a section having a round cross section, **in that** the joint sleeves of the joints of the joint assembly that are fastened to the frame (3) are embodied in the region of the locking elements (12) as cutouts (15) which extend in an upright direction, and **in that** the securing elements and/or locking elements (12) are arranged between the parking supports (3) and the frame (1).

2. Parking device according to Claim 1, **characterized in that** at least one traction element (16) is arranged between the parking supports (3) and the sprung elements (17), **in that** the traction element (16) is fastened to the respective parking support (3) by means of an effective lever arm for generating a torque and rotation of the respective parking support (3).

3. Parking device according to at least one of the preceding claims, **characterized in that** the traction element (16) is embodied in the manner of a belt, and the sprung elements are each embodied as a traction spring (17).

4. Parking device according to Claim 2, **characterized in that** the respective traction element (16) is arranged spaced apart from the respective locking element (12).

5. Parking device according to at least one of the preceding claims, **characterized in that** the locking elements (12) are preferably arranged in the upper region of the joints between the parking supports (3) and the frame (1).

6. Parking device according to at least one of the preceding claims, **characterized in that** a foot activation element (18) for adjusting the parking support (3) into the respective parked position and non-parked position is arranged on the respective parking support (3).

## Revendications

1. Dispositif de stationnement pour une machine portée à trois points, en particulier une machine de distribution, dans lequel le dispositif de stationnement présente respectivement dans la région latérale de la machine des appuis de stationnement agencés sur son châssis au moyen d'un dispositif articulé et pouvant pivoter autour d'un axe d'articulation s'étendant dans la direction de marche entre une position de stationnement et au moins une position de non-stationnement, dans lequel les appuis de stationnement peuvent être bloqués au moins dans la position de stationnement au moyen d'éléments de blocage, **caractérisé en ce que** des éléments à ressort (17), qui maintiennent les appuis de stationnement (3) dans la position respective, sont associés aux appuis de stationnement (3) pour immobiliser et/ou bloquer les appuis de stationnement (3) dans la position respective de stationnement et de non-stationnement, **en ce que** les appuis de stationnement (3) présentent au moins dans la région des articulations du dispositif articulé une partie présentant une section transversale ronde, **en ce que** les douilles d'articulation des articulations du dispositif articulé fixées au châssis sont réalisées dans la région des éléments de blocage (12) en forme de découpes (15) s'étendant en direction verticale, et **en ce que** les éléments d'immobilisation et/ou de blocage (12) sont disposés entre les appuis de stationnement (3) et le châssis (1).

2. Dispositif de stationnement selon la revendication 1, **caractérisé en ce qu'**au moins un élément de traction (16) est disposé entre les appuis de stationnement (3) et les éléments à ressort (17), **en ce que** l'élément de traction (16) est fixé à l'appui de stationnement respectif (3) au moyen d'un bras de levier actif pour la production d'un couple de rotation et d'une rotation de l'appui de stationnement respectif (3).

3. Dispositif de stationnement selon au moins une des revendications précédentes, **caractérisé en ce que** l'élément de traction (16) est réalisé sous forme de courroie et les éléments à ressort sont réalisés chaque fois sous forme de ressort de traction (17).

4. Dispositif de stationnement selon la revendication 2, **caractérisé en ce que** l'élément de traction respectif (16) est disposé à distance de l'élément de blocage respectif (12).

5. Dispositif de stationnement selon au moins une des revendications précédentes, **caractérisé en ce que** les éléments de blocage (12) sont disposés de préférence dans la région supérieure des articulations entre les appuis de stationnement (3) et le châssis (1).

6. Dispositif de stationnement selon au moins une des revendications précédentes, **caractérisé en ce qu'**un élément d'actionnement au pied (18) est disposé sur l'appui de stationnement respectif (3) pour l'inversion de l'appui de stationnement dans la position de stationnement et de non-stationnement respectivement.
